# EUROPÄISCHE PATENTSCHRIFT

(11) **EP 1 395 469 B1**
(45) Veröffentlichungstag und Bekanntmachung des Hinweises auf die Patenterteilung: **14.06.2006**
(21) Anmeldenummer: 01991705.3
(22) Anmeldetag: 29.12.2001
(51) Int. Cl.: B60S 1/34

(54) **WISCHERARM, INSBESONDERE FÜR EIN KRAFTFAHRZEUG UND VERFAHREN ZUR HERSTELLUNG EINES SOLCHEN**
WIPER ARM, IN PARTICULAR FOR A MOTOR VEHICLE AND A METHOD FOR PRODUCING THE SAME
BRAS D'ESSUIE-GLACE DESTINE NOTAMMENT A UN VEHICULE AUTOMOBILE ET SON PROCEDE DE PRODUCTION

(30) Priorität: 09.05.2001 DE 10122458
(43) Veröffentlichungstag der Anmeldung: 10.03.2004
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2001/004943
(87) Internationale Veröffentlichungsnummer: WO 2002/090154

(56) Entgegenhaltungen:
- EP-A- 1 063 136
- WO-A-98/29286
- WO-A-99/08911
- DE-A- 2 031 848
- US-A- 3 042 955

## Beschreibung

### Stand der Technik

Die Erfindung betrifft einen Wischerarm, insbesondere für ein Kraftfahrzeug, und ein Verfahren zur Herstellung eines solchen nach Gattung der unabhängigen Ansprüche.

Es sind schon zahlreiche Wischerarme bekannt, die eine pendelbar bewegliche Wischerwelle mit einem Wischblatt verbinden und dazu dienen, die erforderliche Kraft zur Bewegung des Wischblattes über die Windschutzscheibe von der Wischerwelle auf das Wischblatt zu übertragen und die erforderliche Auflagekraft des Wischblattes auf die Windschutzscheibe zu erzeugen. Aufgrund der hohen zu übertragenden Drehmomente ist es erforderlich, dass das Gelenkteil möglichst leichtbauend aber trotzdem sehr biege- und torsionssteif ist.

Weiterhin ist aus der US-A-3 042 955 ein Wischerarm mit den Merkmalen des Oberbegriffs des Anspruchs 1 bekannt.

### Vorteile der Erfindung

Der erfindungsgemäß Wischerarm mit den Merkmalen des Hauptanspruchs hat den Vorteil, dass durch die Einfügung eines Bodens in ein U-förmiges Profilteil ein geschlossenes biege- und torsionssteifes Rechteckprofil erzeugt wird. Weiterhin vorteilhaft ist in diesem Zusammenhang, dass die Wandstärken beider Teile, des Bodens und des U-förmigen Profilteils, geringer gehalten werden können, als bei bloßer Verwendung eines U-förmigen Profilteils. Ist der Boden darüber hinaus nur punktuell an den Lateralflanken befestigt, ist das Profil sehr leicht und kostengünstig herzustellen. Außerdem ergibt sich ein glattflächiger Boden des Wischerarms, was eine Verbesserung der Umströmung des Wischerarms zur Folge hat.

Da die bewegten Massen des Wischsystems deutlich reduziert werden, können auch die Lager der Wischerwellen kleiner dimensioniert werden. Weiterhin führen die geringeren Massen zu einem geringeren Verschleiß der Lager.

Dadurch, daß die sichtbare Oberseite des Wischerarms vom umgekehrt U-förmigen Profilteil einteilig ausgebildet ist, werden gefährliche Kanten an der Oberseite vermieden und auch das Design des Wischerarms im Vergleich zu heutigen Wischerarmen nicht verschlechtert.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn der Boden in einem Schweißverfahren, an den Lateralflanken befestigt ist. Insbesondere durch ein Buckelschweißverfahren können alle Befestigungspunkte gleichzeitig, kostengünstig und schnell verschweißt werden.

Dabei ist es vorteilhaft, wenn die Lateralflanken mehrere Verprägungen aufweisen, auf denen der Boden beim Einsetzen in das Profilteil zu Liegen kommen kann. Bei der Serienfertigung kann dadurch der Boden in das Profilteil eingesetzt werden, ohne in den Innenraum des U-förmigen Profilteils hineinzufallen, so daß auf weitere Positionierungslaschen oder sonstige Positionierungshilfen verzichtet werden kann.

Vorteilhafterweise weist der Boden entlang seiner den Lateralflanken des Profilteils zugewandten Längsseiten Nasen auf, die auch in die Verprägungen der Lateralflanken eingreifen können.

Besonders vorteilhaft ist es, wenn zwischen Lateralflanken und Boden mindestens ein, vorzugsweise jedoch zwei gegenüberliegende Spalte vorgesehen sind um die Ströme beim Buckelschweißen niedrig zu halten und trotzdem eine haltbare Verbindung zu erzielen.

Weiterhin ist es von Vorteil, wenn der Boden mindestens eine Aufnahme für eine Federeinrichtung aufweist, da dann keine weitere Lasche und kein weiterer Bolzen zur Befestigung einer Zugfeder zwischen Gelenkteil und Befestigungsteil notwendig ist. Dies hat eine wesentliche Kosten- und Gewichtsreduktion zur Folge. Durch den Entfall der Umlappung der Federeinhängung werden Fertigungsstufen eingespart und eine deutlich verbesserte Kontur erreicht, die den Verschnitt minimiert und dadurch Material einspart.

Als weiterer Vorteil ist anzusehen, wenn die Verbindungsstellen des Bodens näher an der Basis angeordnet sind als die basisabgewandten Kanten der Lateralflanken des Profilteils. Auf diese Weise ist der Boden in das Profilteil eingelassen und in einer Seitenansicht des Wischerarms nicht erkennbar, da die Lateralflanken den Boden überragen. Darüber hinaus sind die Schweißstellen und der Boden vor Umwelteinflüssen, wie Salznebel etc. geschützt.

Weiterhin ist es vorteilhaft, zur Verbesserung der Korrosionsbeständigkeit, den Wischerarm aus verzinktem Blech oder verzinktem Stahlblech herzustellen. Durch die Fernwirkung des Zinks sind dadurch auch die Schweißstellen und Beschnittkanten korrosionsgeschützt. Außerdem ist vor dem Lackieren der Wischerarme keine weitere Oberflächenbehandlung mehr erforderlich.

Darüber hinaus ist es besonders vorteilhaft, wenn der Boden Löcher aufweist, so dass der Boden die Stabilität des Profilteils verbessert, das Gewicht des Wischerarms aber nur minimal erhöht wird. Die Anordnung der Löcher kann dabei beispielsweise mit einem Finite-Elemente-Verfahren bestimmt werden.

Das erfindungsgemäße Verfahren zur Herstellung eines Wischerarms mit den Merkmalen des Anspruchs 11 hat den Vorteil, dass durch Stanzen und Einsetzen eines Bodens in das Profilteil, die Stabilität des Profilteils und damit die Stabilität des Wischerarms erhöht wird, ohne dass dies mit einer Erhöhung des Gewichtes des Wischerarms einhergeht. Durch die Befestigung des Bodens an mindestens einer Lateralflanke im Buckelschweißverfahren ist eine einfache und kostengünstige Möglichkeit gegeben die Stabilität des Profilteils zu erhöhen.

In einer einfachen Ausführung kann natürlich auch auf ein Schweißverfahren verzichtet werden und der Boden lediglich durch Klemmen an den Lateralflanken befestigt werden.

### Zeichnungen

Ein Ausführungsbeispiel der Erfindung ist in den Zeichnungen dargestellt und in der nachfolgenden Beschreibung näher erläutert. Es zeigen:
Fig. 1 eine schematische Darstellung einer Wischvorrichtung,
Fig. 2 einen Wischerarm nach dem Stand der Technik in perspektivischer Darstellung,
Fig. 3 das Gelenkteil eines Wischerarms einer erfindungsgemäßen Wischvorrichtung in perspektivischer Darstellung,
Fig. 4 einen Wischerarm einer erfindungsgemäßen Wischvorrichtung in perspektivischer Darstellung,
Fig. 5 ein Befestigungsende eines Wischerarms in perspektivischer Darstellung,
Fig. 6 das Befestigungsende eines Wischerams in einer Variation in perspektivischer Darstellung,
Fig. 7 einen Blick in das Innere eines Wischerarms in perspektivischer Darstellung,
Fig. 8 eine Verprägungsstelle einer Lateralflanke eines Wischerarms in perspektivischer Darstellung,
Fig. 9 die Schritte des erfindungsgemäßen Verfahrens in schematischer Darstellung und
Fig. 10 eine detaillierte Darstellung des Verprägeschritts des erfindungsgemäßen Verfahrens.

### Beschreibung des Ausführungsbeispiels

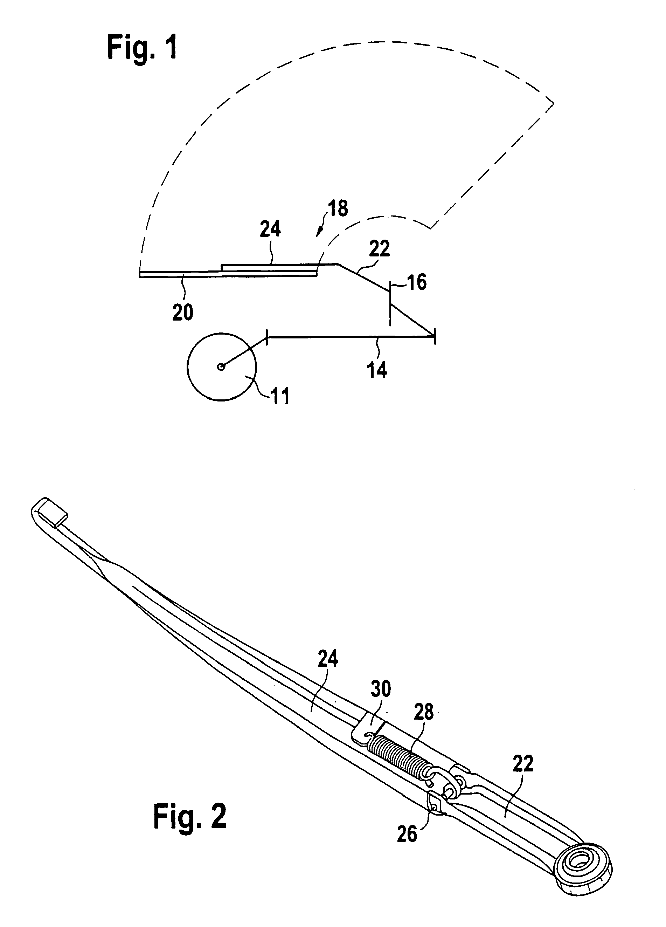

Fig. 1 zeigt eine erfindungsgemäße Wischvorrichtung 10 in schematischer Darstellung. Durch einen Wischermotor 11 wird über ein Gestänge 14, welches beispielsweise als Kurbelgetriebe ausgebildet ist, eine Wischerwelle 16 pendelnd angetrieben. Mit der Wischerwelle 16 ist drehfest der Wischerarm 18 verbunden, der an seinem der Wischerwelle 16 abgewandten Ende ein Wischblatt 20 trägt. Der Wischerarm 18 besteht dabei im Wesentlichen aus einem Befestigungsteil 22, und ein am Gelenkteil 24, wobei das Befestigungsteil 22 das Gelenkteil 24 mit der Wischerwelle 16 drehfest verbindet.

Durch die kurbelnde Bewegung des Wischermotors 12 entsteht über das Gestänge 14 eine Pendelbewegung des Wischerarms 18. Dies verursacht ständige Lastwechsel im Bereich des Wischerarms 18, da das Wischblatt 20, das mit einem Ende des Wischerarms 18 verbunden ist, durch seine Reibung auf der nicht dargestellten Scheibe, der Pendelbewegung entgegenwirkt.

Fig. 2 zeigt einen Wischerarm nach dem Stand der Technik. Das Gelenkteil 24 ist mittels eines Bolzens 26 drehbeweglich mit dem Befestigungsteil 22 verbunden. Weiterhin sind Befestigungsteil 22 und Gelenkteil 24 über eine Federeinrichtung 28, die beispielsweise als Zugfeder ausgebildet ist, verspannt. Dazu ist die Federeinrichtung 28 am Gelenkteil 24 in eine Lasche 30 eingehakt, die als Umlappung aus der basisabgewandten Kante der Lateralflanke gebildet ist. Das andere Ende der Federeinrichtung 28 ist an einem Befestigungspunkt am Befestigungsteil, der außerhalb der Drehachse zwischen Befestigungsteil 22 und Gelenkteil 24 angeordnet ist, befestigt.

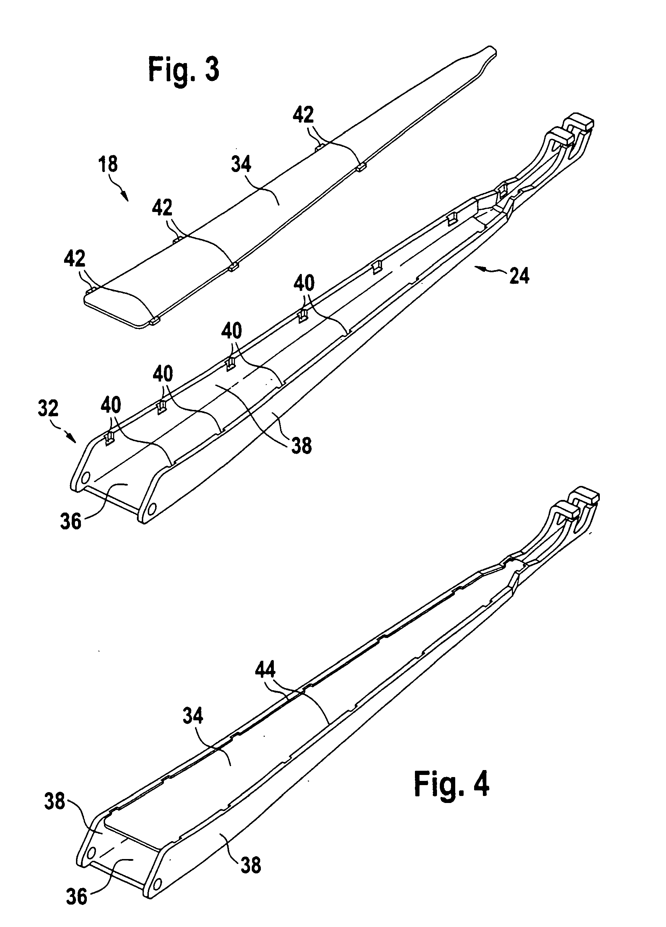

Fig. 3 zeigt ein Gelenkteil 24 einer erfindungsgemäßen Wischvorrichtung 10 während des Fertigungsprozesses.

Das Gelenkteil 24 des Wischerarms 18 besteht aus einem Profilteil 32 und einem Boden 34. Das Profilteil 32 ist von im Wesentlichen U-förmiger Gestalt und weist daher eine Basis 36 mit zwei Lateralflanken 38 auf. An den Lateralflanken 38 sind an den basisabgewandten Kanten Verprägungen 40 angeordnet. Der Boden 34 ist als flaches Blechteil ausgestanzt, und derart ausgebildet, dass er der Kontur der Lateralflanken 38 im Wesentlichen folgt. Auf diese Weise ist der Boden 34 genau in das U-förmige Profil eingepaßt und zwar so, dass der Boden 34 beim Einlegen in das Profilteil 32 dieses nur an den Verprägungen 40 berührt.

Zur Vergrößerung der Auflagefläche weist der Boden 34 an seinen den Lateralflanken 38 zugewandten Längsseiten 41 Nasen 42 auf.

Fig. 4 zeigt ein Gelenkteil 24 einer erfindungsgemäßen Wischvorrichtung 10 mit eingelegtem Boden 34. Dadurch, dass der Boden 34 die Lateralflanken 38 nur im Bereich der Verprägungen 40 berührt entstehen zwei gegenüberliegende Spalte 44. An den Verprägungen 40 ist der Boden 34 mit dem Profilteil 32 verschweißt.

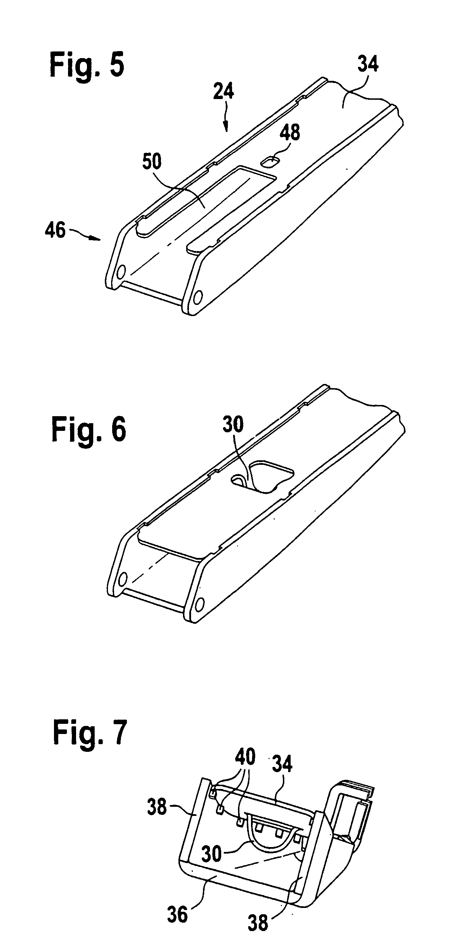

In Fig. 5 ist ein Befestigungsende 46 eines Gelenkteils 24 in perspektivischer Darstellung gezeigt. Der Boden 34 weist eine Aufnahme 48 auf, die als Loch ausgebildet ist. In diese kann ein Ende der Federeinrichtung 28 (Fig. 2) eingehakt werden. Weiterhin weist der Boden 34 eine Aussparung 50 auf, um ausreichend Raum für die Federeinrichtung 28 zu schaffen.

Die Federeinrichtung 28 kann aber auch gänzlich innerhalb des Wischerarms 18 angeordnet sein. Wie in Fig. 6 gezeigt, kann dazu aus dem Boden 34 eine Lasche 30 geformt sein, die sich aus der Ebene des Bodens 34 halbkreisförmig in das Innere des Profilteils 32 hinein erstreckt. Diese Variation der Erfindung ist in Fig. 7 nochmals dargestellt.

Fig. 7 zeigt einen Blick in das Befestigungsende 46 des Wischerarms 18 in einer perspektivischen Darstellung. Deutlich ist hier auch zu sehen, dass die Verprägungen 40 so weit in Richtung der Basis 36 verlaufen, dass der Boden 34 gänzlich innerhalb des Profilteils 32 verschwindet oder anders formuliert, dass die äußere Ebene des Bodens 34 näher an der Basis 36 angeordnet ist als eine Ebene die durch die basisabgewandten Kanten der beiden Lateralflanken 38 gebildet ist.

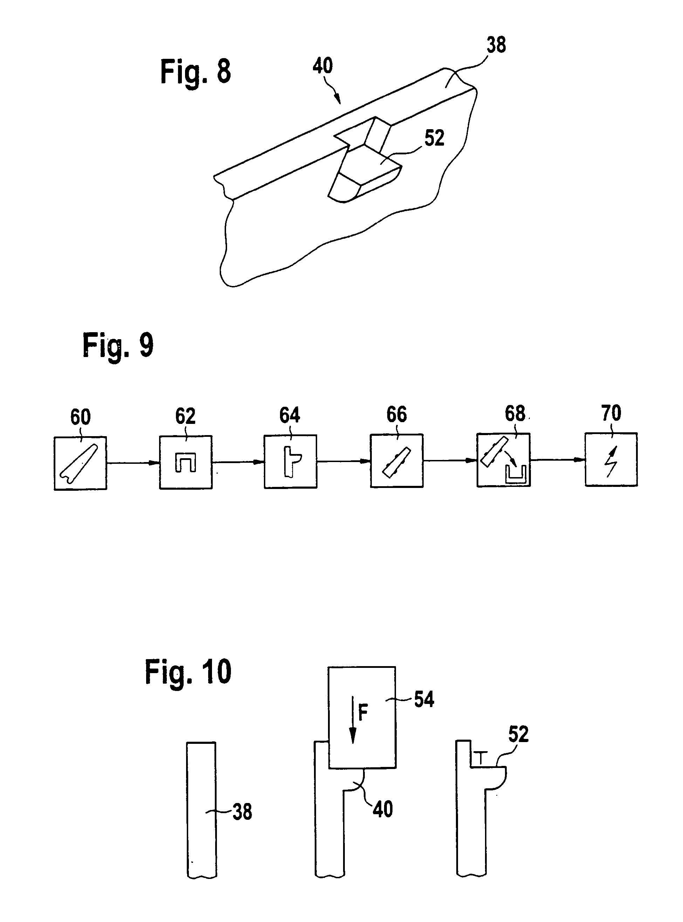

In Fig. 8 ist die Verprägung 40 an der Lateralflanke 38 detailliert dargestellt. Mit einem Prägestempel wurde ein Teil der Lateralflanke 38 auf der Innenseite des U-förmigen Profilteils 32 derart verprägt, dass ein Plateau 52 durch das in Richtung der Basis verprägte Material entsteht. Auf diesem Plateau 52 kann dann der Boden 34 zur Auflage kommen.

In Fig. 9 ist das erfindungsgemäße Verfahren in seinen einzelnen Schritten detailliert dargestellt. In einem ersten Stanzschritt 60 wird das Profilteil 32 aus einem ebenen Blech ausgestanzt. Im zweiten Biegeschritt 62 wird das ausgestanzte, nun noch flache Profilteil 32 U-förmig gebogen. Im folgenden Verprägeschritt 64 werden die Verprägungen 40 mit den Plateaus 52 an den Befestigungspunkten vorgenommen. Anschließend folgt der Bodenstanzschritt 66, bei dem das Bodenblech mit den Nasen 42 ausgestanzt wird. Im folgenden Einsetzschritt 68 wird der Boden 34 in das Profilteil 32 eingesetzt und im anschließenden Schweißschritt durch Anlegen einer Spannung zwischen Boden 34 und Profilteil 32 im Buckelschweißverfahren an den Verprägestellen miteinander verschweißt.

In Fig. 10 ist der Verprägeschritt 64 etwas detaillierter dargestellt. An der basisabgewandten Kante der Lateralflanke 38 wird ein Prägestempel 54 angesetzt. Dieser besitzt die gewünschte Breite der Verprägung 40 und wird etwa in der Mitte des Querschnitts der Lateralflanke an der basisabgewandten Kante angesetzt. Durch eine Kraft F, die auf den Prägestempel 54 wirkt, wird das Material der Lateralflanke 38 in Richtung der Basis gepreßt, wodurch das Plateau 52 aus dem durch den Stempel 54 verdrängten Material entsteht. Die Tiefe T der Verprägung 40, also der Abstand zwischen der basisabgewandten Kante der Lateralflanke 38 und dem Plateau 42 ist dabei mindestens so groß wie die Dicke des Bodens 34.

Natürlich kann wie das Gelenkteil 24 auch das Befestigungsteil 22 mit einem derartigen Boden 34 versehen werden. Ebenfalls ist es denkbar, auf die Verprägungen 40 zu verzichten und den Boden 34 lediglich an Hand der Nasen 42 auf der basisabgewandten Kante der Lateralflanke 38 aufliegen zu lassen und zu verschweißen.

In einer einfachen Variation der Erfindung, kann der Boden 34 auch nur durch Klemmen an den Lateralflanken 38 befestigt sein. In der Fertigung kann dann beispielsweise nur jede zweite Verprägung 40 vorgenommen, anschließend der Bodery 34 eingelegt und dann die übrigen Verprägungen 40 vorgenommen werden, so daß der Boden 34 wechselweise durch die Verprägungen 40 von innen und außen gehalten wird.

## Patentansprüche

1. Wischerarm, insbesondere für ein Kraftfahrzeug, der eine pendelbar bewegliche Wischerwelle (16) mit einem Wischblatt (20) zu verbinden vermag und aus mindestens einem, zumindest teilweise umgekehrt U-förmigen Profilteil (32) mit einer Basis (36) und zwei Lateralflanken (38) besteht, wobei das Profilteil (32) zumindest teilweise mit mindestens einem Boden (34) versehen ist, **dadurch gekennzeichnet, dass** der Boden (34) nur punktuell an den Lateralflanken (38) befestigt ist.

2. Wischerarm nach Anspruch 1, **dadurch gekennzeichnet, dass** die Lateralflanken (38) mehrere, insbesondere paarweise gegenüberliegende Verprägungen (40) aufweist.

3. Wischerarm nach einem der vorhergehenden Ansprüche, **dadurch gekennzeichnet, dass** der Boden angeschweißt, vorzugsweise in einem Buckelschweißverfahren an den Lateralflanken (38) befestigt ist.

4. Wischerarm nach einem der vorhergehenden Ansprüche, **dadurch gekennzeichnet, dass** der Boden (34) entlang seiner den Lateralflanken (38) zugewandten Längsseiten (41) Nasen (42) aufweist.

5. Wischerarm nach einem der vorhergehenden Ansprüche, **dadurch gekennzeichnet, daß** zwischen Lateralflanken (38) und Boden (34) mindesten ein, vorzugsweise zwei, insbesondere gegenüberliegende Spalte (44) vorgesehen sind.

6. Wischerarm nach einem der vorhergehenden Ansprüche, **dadurch gekennzeichnet, daß** der Boden (34) mindestens eine Aussparung (50) für eine Federeinrichtung (28) aufweist.

7. Wischerarm nach einem der vorhergehenden Ansprüche, **dadurch gekennzeichnet, daß** der Boden (34) mindestens eine Aufnahme (48) für eine Federeinrichtung (28) aufweist.

8. Wischerarm nach einem der vorhergehenden Ansprüche, **dadurch gekennzeichnet, daß** die Lateralflanken (38) den Boden (34) überragen.

9. Wischerarm nach einem der vorhergehenden Ansprüche, **dadurch gekennzeichnet, daß** der Wischerarm (18) aus verzinktem Blech besteht.

10. Wischerarm nach einem der vorhergehenden Ansprüche, **dadurch gekennzeichnet, daß** der Boden (34) Löcher zur Gewichtsreduktion aufweist.

11. Verfahren zur Herstellung eines Wischerarms nach einem der vorhergehenden Ansprüche, mit mindestens folgenden Schritten:
Stanzen und Biegen eines im wesentlichen U-förmigen Profilteils (32) mit einer Basis (36) und zwei Lateralflanken (38)
Anbringen von Verprägungen an den Lateralflanken (38) Stanzen eines Bodens (34)
Einsetzen des Bodens (34) in das Profilteil (32) Befestigung des Bodens an mindestens einer Lateralflanke (38) durch Schweißen.

12. Verfahren zur Herstellung eines Wischerarms nach einem der vorhergehenden Ansprüche, mit mindestens folgenden Schritten:
Stanzen und Biegen eines im wesentlichen U-förmigen Profilteils (32) mit einer Basis (36) und zwei Lateralflanken (38)
Anbringen von Verprägungen an den Lateralflanken (38) Stanzen eines Bodens (34)
Einsetzen des Bodens (34) in das Profilteil (32) Befestigung des Bodens an mindestens einer Lateralflanke (38) durch weitere Verprägungen (40).

## Claims

1. Wiper arm, in particular for a motor vehicle, which is capable of connecting a wiper shaft (16), which is moveable in a swingable manner, to a wiper blade (20) and comprises at least one, at least partially inverted U-shaped profile part (32) with a base (36) and two lateral flanks (38), the profile part (32) being at least partially provided with at least one bottom (34), **characterized in that** the bottom (34) is only fastened to the lateral flanks (38) at certain points.

2. Wiper arm according to Claim 1, **characterized in that** the lateral flanks (38) have a plurality of stamped formations (40) in particular lying opposite one another in pairs.

3. Wiper arm according to one of the preceding claims, **characterized in that** the bottom is welded on, and is preferably fastened to the lateral flanks (38) in a projection welding process.

4. Wiper arm according to one of the preceding claims, **characterized in that** the bottom (34) has lugs (42) along its longitudinal sides (41) facing the lateral flanks (38).

5. Wiper arm according to one of the preceding claims, **characterized in that** at least one, preferably two gaps (44) in particular lying opposite each other are provided between lateral flanks (38) and bottom (34).

6. Wiper arm according to one of the preceding claims, **characterized in that** the bottom (34) has at least one cut-out (50) for a spring device (28).

7. Wiper arm according to one of the preceding claims, **characterized in that** the bottom (34) has at least one mount (48) for a spring device (28).

8. Wiper arm according to one of the preceding claims, **characterized in that** the lateral flanks (38) protrude over the bottom (34).

9. Wiper arm according to one of the preceding claims, **characterized in that** the wiper arm (18) is composed of galvanized sheet metal.

10. Wiper arm according to one of the preceding claims, **characterized in that** the bottom (34) has holes for reducing the weight.

11. Method for producing a wiper arm according to one of the preceding claims, with at least the following steps:
punching and bending an essentially U-shaped profile part (32) with a base (36) and two lateral flanks (38)
attaching stamped formations to the lateral flanks (38)
punching a bottom (34)
inserting the bottom (34) into the profile part (32)
fastening the bottom to at least one lateral flank (38) by welding.

12. Method for producing a wiper arm according to one of the preceding claims, with at least the following steps:
punching and bending an essentially U-shaped profile part (32) with a base (36) and two lateral flanks (38)
attaching stamped formations to the lateral flanks (38)
punching a bottom (34)
inserting the bottom (34) into the profile part (32)
fastening the bottom to at least one lateral flank (38) by means of further stamped formations (40).

## Revendications

1. Bras d'essuie-glace, notamment de véhicule automobile, comportant un axe d'essuie-glace (16) à mouvement pendulaire relié à un balai d'essuie-glace (20) et se composant d'au moins une pièce profilée (32) en forme de U en partie renversée, ayant une partie de base (36) et deux flancs latéraux (38), la partie profilée (32) étant au moins partiellement munie d'un fond (34),
**caractérisé en ce que**
le fond (34) n'est fixé aux flancs latéraux (38) qu'en des points.

2. Bras d'essuie-glace selon la revendication 1,
**caractérisé en ce que**
les flancs latéraux (38) comportent plusieurs empreintes (40), qui notamment se font face par paires.

3. Bras d'essuie-glace selon l'une des revendications précédentes,
**caractérisé en ce que**
le fond est soudé, de préférence fixé aux flancs latéraux (38) par soudage à bossages.

4. Bras d'essuie-glace selon l'une des revendications précédentes,
**caractérisé en ce que**
le fond (34) comporte des becs (42) sur ses grands côtés (41) tournés vers les flancs latéraux (38).

5. Bras d'essuie-glace selon l'une des revendications précédentes,
**caractérisé par**
au moins un intervalle (44) et de préférence notamment deux intervalles en regard entre les flancs latéraux (38) et le fond (34).

6. Bras d'essuie-glace selon l'une des revendications précédentes,
**caractérisé en ce que**
le fond (34) comporte au moins une découpe (50) pour un dispositif à ressort (28).

7. Bras d'essuie-glace selon l'une quelconque des revendications précédentes,
**caractérisé en ce que**
le fond (34) comporte au moins un logement (48) pour une installation à ressort (28).

8. Bras d'essuie-glace selon l'une quelconque des revendications précédentes,
**caractérisé en ce que**
les flancs latéraux (38) débordent sur le fond (34).

9. Bras d'essuie-glace selon l'une quelconque des revendications précédentes,
**caractérisé en ce que**
le bras d'essuie-glace (18) est en tôle galvanisée.

10. Bras d'essuie-glace selon l'une quelconque des revendications précédentes,
**caractérisé en ce que**
le fond (34) comporte des trous pour être allégé.

11. Procédé de fabrication d'un bras d'essuie-glace selon l'une des revendications précédentes, comprenant au moins l'une des étapes suivantes :
- emboutissage et cintrage d'une pièce profilée (32) à forme essentiellement en U ayant une partie de base (36) et deux flancs latéraux (38),
- réalisation de parties embouties dans les flancs latéraux (38),
- emboutissage d'un fond (34),
- mise en place du fond (34) dans la pièce profilée (32),
- fixation du fond à au moins un flanc latéral (38) par soudage.

12. Procédé de fabrication d'un bras d'essuie-glace selon l'une des revendications précédentes, comprenant au moins les étapes suivantes :
- emboutissage et cintrage d'une pièce profilée (32) ayant principalement une forme de U comprenant une partie de base (36) et deux flancs latéraux (38),
- réalisation d'emboutissage dans les flancs latéraux (38),
- emboutissage d'un fond (34),
- mise en place du fond (34) dans la pièce profilée (32),
- fixation du fond à au moins un flanc latéral (38) par d'autres emboutissages (40).
